# EUROPÄISCHE PATENTSCHRIFT

(11) **EP 2 529 259 B1**
(45) Veröffentlichungstag und Bekanntmachung des Hinweises auf die Patenterteilung: **22.04.2015**
(21) Anmeldenummer: 11708929.2
(22) Anmeldetag: 25.01.2011
(51) Int. Cl.: G02B 6/00, G09F 13/18, F21V 8/00

(54) **BELEUCHTUNGSKÖRPER MIT EINER LICHTQUELLE UND EINEM OPTISCHEN DIFFUSOR**
LIGHTING FIXTURE COMPRISING A LIGHT SOURCE AND AN OPTICAL DIFFUSER
APPAREIL D'ÉCLAIRAGE COMPRENANT UNE SOURCE DE LUMIÈRE ET UN DIFFUSEUR OPTIQUE

(30) Priorität: 26.01.2010 DE 102010000195
(43) Veröffentlichungstag der Anmeldung: 05.12.2012
(73) Patentinhaber: Theler Seltmann, Tania, 10711 Berlin (DE); Seltmann, Christian, 10711 Berlin (DE)
(72) Erfinder: SELTMANN, Christian, 10711 Berlin (DE)
(74) Vertreter: Wagner Albiger & Partner Patentanwälte mbB
(86) Internationale Anmeldenummer: PCT/IB2011/050323
(87) Internationale Veröffentlichungsnummer: WO 2011/092626

(56) Entgegenhaltungen:
- EP-A1- 1 795 553
- EP-A2- 0 457 009
- WO-A2-2006/137660
- WO-A2-2008/146290
- JP-A- 2007 186 967
- US-A1- 2004 004 827
- US-A1- 2006 158 903
- US-A1- 2008 024 694
- US-A1- 2009 086 486

## Beschreibung

Die Erfindung betrifft einen Beleuchtungskörper mit einer Lichtquelle und einem optischen Diffusor. Die Lichtquelle ist eine Lumineszenz-Lichtquelle mit mindestens einer lichtemittierenden Diode. Der Diffusor ist ein Glasdiffusor aus einem Schaumglas.

Der Bedarf an Raumbeleuchtung mit kalt erzeugtem Licht mittels lichtemittierender Dioden nimmt aufgrund der zwischenzeitlich erreichten, hoch effizienten Technik derartiger lichtemittierender Dioden ständig zu. Wenn auch das Halbleitermaterial dieser lichtemittierenden Dioden nahezu monochromatisches Licht ausstrahlt, so kann durch entsprechende Beschichtungen von fluoreszierenden Linsensystemen, mittels Zusammenstellung unterschiedlich strahlender Leuchtdioden, ein nahezu weißes Lichtspektrum wie Tageslicht oder ein warmweißes Spektrum für Raumbeleuchtungen durch die hoch effizienten lichtemittierenden Dioden mit entsprechender Optik erzeugt werden.

Im Unterschied zu Glühbirnen, die ein warmweißes Licht mit unterschiedlicher Farbtemperaturen bis 8000 K erzeugen, sowie den luminiszierenden, kaltleuchtenden Halogenlampen, Neonlampen oder Energiesparlampen, strahlt eine lichtemittierende Diode mit einem über entsprechende Optiken vorgegebenen Winkel zwischen 90 ° - 120 ° in einer Hauptrichtung ab. Ohne jeden Diffusor wirkt das Licht einer lichtemittierenden Diode deshalb grell und blendet den Betrachter. Dieses kann mit einem Diffusor abgeschwächt werden, wobei derartige Diffusoren einen opaken Kunststoff oder ein Milchglas aufweisen.

Aus der Druckschrift DE 20 2007 008 258 U1 ist ein Leuchtmittel aus einer lichtemittierenden Diode bekannt, die einen Sockel mit Netzanschluss, mindestens eine weißes Licht emittierenden Diode und mindestens eine weitere monochromatisches lichtemittierenden Diode aufweist bekannt. Dabei weist das von der lichtemittierenden Lumineszenz-Lichtquelle emittierte Licht eine Farbtemperatur von höchstens 6500 K und einen Farbwidergabeindex von mindestens 80 Ra auf. In der bekannten Lichtquelle sind mehrere lichtemittierende Dioden derart eng aneinander angeordnet, dass ein homogenes Lichtbündel erzeugt wird. Darüber hinaus weisen die lichtemittierenden Leuchtmittel eine Phosphorschicht auf, die alle lichtemittierenden Dioden überdeckt und durch den fluoreszierenden Phosphor ein nahezu weißes Licht für blau leuchtende Dioden erzeugt.

Der Diffusor besteht bei diesem bekannten LED-Leuchtmittel aus einem Glaskolben mit einem blendfreien Bereich, der auf einer Mikro- oder Nanostruktur basiert, und dadurch die Blendwirkung der lichtemittierenden Leuchtmittel dämpft. Der Glaskolben und der zugehörige Sockel dieses LED-Leuchtmittels ist herkömmlichen Glühbirnen angepasst, wobei das Licht nicht durch einen Heißdraht erzeugt wird, sondern durch Lumineszenz, das heißt, durch kalte Lichterzeugung entsteht. Der Nachteil eines derartigen LED-Leuchtmittels ist der relativ komplexe und kostenintensive Aufbau sowie des Sockels mit seiner aufwendigen Elektronik. Ferner sind aufwendige Mikro- und/oder Nanostrukturen bis hin zu Fresnell-Linsen erforderlich, um den bruchempfindlichen Glaskolben des glühbirnenartigen LED-Leuchtmittels als Diffusor zu realisieren.

Aus der Druckschrift GB 1 245 417 ist ein poröses Material als Schaumglas und ein Verfahren, sowie eine Vorrichtung zur Herstellung derselben bekannt. Dieses Schaumglas weist eine Vielzahl von geschlossenen Poren in Form von Gasblasen auf und kann für die unterschiedlichsten thermischen und elektrischen Anwendungen als transparentes, jedoch nicht klarsichtiges Isolierglas oder für elektrische Isolatoren eingesetzt werden.

Dementsprechend wird hier unter einem Schaumglas ein poröses Material mit einer Matrix aus einem Mineralglas (auch Silikatglas oder anorganisches Glas genannt) und darin eingeschlossenen Poren, die typischerweise als Luftblasen ausgebildet sind, verstanden. Dokument US 2009/0086486 offenbart Beleuchtungskörper mit einer Lichtquelle und einem optischen Diffusor aufweisend: - eine Lumineszenz-Lichtquelle mit mindestens einer lichtemittierenden Diode und - einen Glasdiffusor,wobei der Glasdiffusor einen massiven Diffusorblock aus Schaumglas aufweist, wobei der Diffusorblock ein Schaumglas aus Mineralglas aufweist und wobei die Lichtquelle in Lichtleisten, die den Diffusorblock umgeben, angeordnet ist, wobei das Schaumglas des Glasdiffusors geschlossenporig ist und Gasblasen aufweist. [8] Aufgabe der vorliegenden Erfindung ist es, einen Beleuchtungskörper mit mindestens einer Lichtquelle zu schaffen, der kostengünstig herzustellen und mit einem stabilen Glasdiffusor ausgestattet ist.

Diese Aufgabe wird mit dem Anspruch 1 gelöst. Vorteilhafte Weiterbildungen der Erfindung ergeben sich aus den abhängigen Ansprüchen.

Erfindungsgemäß wird ein Beleuchtungskörper mit einer Lichtquelle und einem optischen Diffusor geschaffen. Die Lichtquelle ist eine Lumineszenz-Lichtquelle mit mindestens einer lichtemittierenden Diode. Der Diffusor ist ein Glasdiffusor. Der Glasdiffusor weist einen massiven Diffusorblock aus Schaumglas auf. Die Lichtquelle ist in Lichtleisten angeordnet, die den Diffusorblock umgeben.

Der aus einem massiven Glasbarren, beispielsweise mit einer 25 mm Materialstärke hergestellte Diffusor, wird durch die mit lichtemittierenden Dioden ausgestatteten Lichtleisten einheitlich von Licht durchflutet. Unterschiedliche Rahmensysteme können somit diesen Glasbarren als Diffusorblock unbegrenzt skalierbar für Wände und Decken für eine Abstrahlung von indirekter Beleuchtung in Räumen nutzbar machen. Außerdem können die Beleuchtungskörper durch Unterlegung von Schablonen oder Bildern bei transparentem Glas optisch individuell gestaltet werden.

Die wichtigen Lichtdiffusionseigenschaften werden durch präzisen Lufteinschluss in dem Diffusorblock erreicht, wobei eine manuelle Walztechnik beim Einformen des Schaumglases dem Glasdiffusor einen organischen Leuchtstil ungleich dem von Milchglas oder von herkömmlichen opaken Kunststoffen verleiht. Damit kann in vorteilhafter Weise trotz des Einsatzes von lichtemittierenden Dioden, die Kaltlicht erzeugen und abstrahlen, ein warmes Licht direkt und diffus abgestrahlt werden.

Ein weiterer Vorteil liegt in der Anwendung einer derartigen lichtemittierenden Diode, bei der welcher der Energieeinsatz lediglich 5 % des Energieeinsatzes von Glühbirnen beträgt, das eine gleichhohe Leuchtkraft erreicht wird. Darüber hinaus können äußerst geringe Einbautiefen durch plattenförmige Gestaltung des Diffusorblockes erreicht werden. Weiterhin ist es möglich, eine begrenzte Farbtemperatur durch Einfärbungen des Glases, oder durch Farbschablonen, oder durch unterschiedliche Rahmenarten, oder durch die Gestaltung und Zusammenstellung der lichtemittierenden Dioden zu erzielen. Darüber hinaus ist es möglich, aufgrund einer indirekten Lichtabstrahlung des Diffusorblockes eine verringerte Insektenanziehung zu erreichen. Außerdem ist der Einsatz von massiven Diffusionsblöcken nachhaltig im Sinne einer Verwendung von Altglaspartikeln zur Herstellung des Schaumglases des Diffusors.

Als Anwendungen für den Beleuchtungskörper mit massivem Diffusorblock ergeben sich sowohl funktionale als auch dekorativ ambientale Vorteile, beispielsweise bei Nacht- und Orientierungsbeleuchtungen oder bei einer Beleuchtung von Treppenaufgängen, oder bei Beleuchtung von Toren und/oder Türen oder bei Beleuchtung von Fluren , oder bei einem Beleuchten von inneren und äußeren Treppenstufen eines Hauses. Darüber hinaus ergeben sich vorteilhafte Anwendungen des diffus leuchtenden Beleuchtungskörpers, z. B. als Nachtbeleuchtung in einem Kinderzimmer. Außerdem kann der Beleuchtungskörper in Möbelbeleuchtungen, in Nachttische, in Bettumrandungen, in Wohnzimmertische oder in Esszimmertische eingebaut und integriert werden. Darüber hinaus sind Bad- und Spiegelbeleuchtung, Saunabeleuchtung und Poolbereichsbeleuchtungen durch diesen Beleuchtungskörper möglich.

In Hotelzimmern kann eine Moodlight-Atmosphäre erzeugt werden. In Bars und Restaurants können neue Lichtkonzepte realisiert werden. Ferner ist es möglich, den Beleuchtungskörper bei der Werbemittelgestaltung einzusetzen oder in den Diffusor Logos oder Schriftsätze und/oder andere Werbestrukturen bereits beim Gieß- und Walzvorgang einzupressen. Darüber hinaus ergeben sich vorteilhafte Anwendungen in medizinischen Anwendungsbereichen, wie einer Melatonin-Steuerung und einer Behandlung von saisonaler Depression. Auch kann der Biorhythmus in Arbeitsbereichen durch die Anwendung und den Einsatz eines derartigen Beleuchtungskörpers verbessert werden. Schließlich kann die Ausgestaltung von Yachten und Flugzeugen individuell gestaltet werden.

In einer Ausführungsform der Erfindung ist das Schaumglas des Glasdiffusors geschlossenporig und weist Gasblasen auf, wobei die Gasblasen einen mittleren Durchmesser dm zwischen 0,5 mm ≤ dm ≤ 1 mm aufweisen. Aufgrund von beispielsweise manuellen Einflüssen während des Herstellungsprozesses, insbesondere beim Walzen, können einzelne Gasblasen auch größer als 1 mm sein.

In einer weiteren Ausführungsform der Erfindung ist der Diffusorblock eine massive Diffusorplatte, die eine Oberseite, eine Rückseite und Randseiten aufweist. Die Randseiten werden in dieser Ausführungsform der Erfindung von der Lichtquelle in Lichtleisten umgeben. Somit strahlt in vorteilhafter Weise die Lumineszenz-Lichtquelle in Form von lichtemittierenden Dioden in die Randseiten der massiven Diffusorplatte aus Schaumglas ein, und das eingestrahlte Licht wird an der Vielzahl der eingeschlossenen Gasblasen derart gestreut, dass nun ein indirektes Licht über die Oberseite der Diffusorplatte abgestrahlt werden kann. Dazu kann der Diffusorblock weißes Glas aufweisen, wobei unter weißem Glas in diesem Zusammenhang Klarglas zu verstehen ist, das mit einer Vielzahl von Gasblasen durchsetzt ist. Andererseits ist es auch möglich, den Diffusorblock nicht aus einem Schaumglas mit Klarglas bzw. weißem Glas herzustellen, sondern den Diffusorblock mit farbigem Glas zu versehen. Das bedeutet jedoch, dass die Farbtemperatur um mehr als tausend Kelvin herabgesetzt ist.

In einer weiteren Ausführungsform der Erfindung weist die Lumineszenz-Lichtquelle einen Abstrahlungswinkel α zwischen 60° ≤ α ≤ 150° auf. Mit diesem relativ weiten Abstrahlungswinkel, wird dennoch erreicht, dass die Lumineszenz-Lichtquelle lediglich in einer Hauptrichtung, nämlich von den Rändern des Diffusorblockes oder der Diffusorplatte in den Beleuchtungskörper einstrahlt, dort an den Gasblasen gestreut wird und somit diesen speziellen Lichteffekt des Beleuchtungskörpers erzeugt. Ein bevorzugter eingeschränkter Abstrahlungsbereich für den Abstrahlungswinkel α liegt zwischen 90° ≤ α ≤ 120°.

Derartige Lumineszenz-Lichtquellen sind somit stärker in einer Hauptstrahlungsrichtung ausgerichtet und unterstützen den indirekten Strahlungseffekt des Beleuchtungskörpers, da Anteile der Strahlung, die direkt von der Lumineszenzlichtquelle ausgehen weiter eingeschränkt ist. Durch geeignete Wahl der lichtemittierenden Dioden und ihrer entsprechenden fluoreszierenden Optik kann erreicht werden, dass die Lumineszenz-Lichtquelle ein Licht emittiert, das einem weißen Lichtspektrum mit einer Farbtemperatur unter 5500 K angepasst ist. Dieses weiße Lichtspektrum entspricht in etwa dem Tageslicht. Weiterhin ist es möglich, dass die Lumineszenz-Lichtquelle einer weiteren Ausführungsform der Erfindung ein Licht emittiert, das einem warmweißen Lichtspektrum mit einer Farbtemperatur unter 2700 K angepasst ist, was der Farbtemperatur einer herkömmlichen heißen Lichtquelle wie einer Glühbirne entspricht.

Die indirekte Strahlung des Schaumglases kann weiter verstärkt werden, indem Mineralglas mit fluoreszierenden Mineralien eingesetzt wird. Derartige fluoreszierende Mineralien verursachen eine zusätzliche spektrale Auffächerung des von den lichtemittierenden Dioden ausgehenden Spektrums. Außerdem kann die optische Wirkung des Diffusorblockes dadurch weiter verstärkt werden, dass in einer weiteren Ausführungsform der Erfindung, die Rückseite des Diffusorblockes eine optisch reflektierende Beschichtung oder eine optisch reflektierende Folie eines Reflektors aufweist.

Für besondere Lichteffekte kann die Rückseite des Diffusorblockes eine optisch durch den Diffusorblock durchscheinende Farbschablone aufweisen oder es können farbige Muster und/oder Strukturen oberseitig in den Diffusorblock eingepresst worden sein und/oder im Inneren angeordnet sein, um spezielle Design-Effekte zu erreichen. Die den Diffusorblock umgebenden Lichtleisten weisen in einer weiteren Ausführungsform der Erfindung eine Höhe auf, die geringer ist als die Dicke des Diffusorblockes, und einen umgebenden Rahmen, mit mindestens einer umlaufenden Dichtnut für den Diffusorblock bilden. Diese umlaufende Dichtnut schützt das Eindringen von Feuchtigkeit in den Bereich der Lichtleiste, welcher die Leuchtdioden aufnimmt und den Diffusor mit den Lichtleisten blendenfrei verbindet.

In diesem Bereich der Lichtleisten mit lichtemittierenden Dioden weisen die Lichtleisten Aussparungen für die Aufnahme und den elektrischen Anschluss der Lichtquelle in Form von lichtemittierenden Dioden auf. Ist der Rahmen aus einem Holz oder einem anderen Isolierstoff gefertigt, so sind in den Lichtleisten mindestens zwei Anschlussleitungen für die Anode und die Kathode der lichtemittierenden Dioden vorgesehen. Andererseits ist es auch möglich, dass der Rahmen eine Metalllegierung aus der Gruppe Aluminium, Kupfer oder Eisen aufweist, die bereits auf Anodenpotenzial liegen, sodass lediglich isoliert von diesem Metallrahmen mittels einer Kathodenzuleitung das Kathodenpotenzial an die lichtemittierenden Dioden geleitet wird.

Die Lichtleisten weisen eine Mehrzahl von lichtemittierenden Dioden in entsprechend am Umfang des Diffusorblockes verteilten Aussparungen auf. Dabei können die lichtemittierenden Dioden seriell oder parallel zwischen dem Kathodenpotenzial der Kathodenzuleitung und dem elektrisch leitenden Rahmen geschaltet sein. Dieses hat den Vorteil, dass derartige Beleuchtungskörper bei entsprechend vielen seriell geschalteten lichtemittierenden Dioden auch mit einer normalen, jedoch gleich gerichteten Netzspannung versorgt werden können. Vorzugsweise ist es jedoch vorgesehen, dass die lichtemittierenden Dioden weitestgehend parallel zwischen Anoden- und Kathodenpotenzial geschaltet sind und damit eine relativ geringe und gefahrlose Spannung an die Beleuchtungskörper angelegt werden kann. Teilweise werden die lichtemittierenden Dioden seriell und parallel geschaltet, um die Stromzuleitungen in ihrem Querschnitt zu minimieren und um eine Gleichspannung an den Beleuchtungskörper zu legen, die so hoch ist, dass sie für den Menschen gerade noch ungefährlich ist. Dies hat weiterhin den Vorteil, dass auf einen Schutzleiter oder Erdleiter wie einen Fehlerstromschalter für den Beleuchtungskörper verzichtet werden kann.

Die Gestaltung des Diffusorblockes kann den Anwendungen angepasst sein und eine polygonale Struktur aufweisen wobei in den Ecken des Polygons die Lichtquellen Lotanschlussflächen für ein Anoden- und ein Kathodenpotenzial aufweisen. Somit kann von außen an die Lichtquellen in den Eckbereichen die entsprechende Versorgungsgleichspannung angelegt werden. Zwischenzeitlich hat sich ein viereckiger Diffusorblock bewährt, bei dem die Lichtleisten lediglich zwei Längen aufweisen, entweder 90 mm oder 180 mm. Die Höhe derartiger Lichtleisten hängt von der Größe der lichtemittierenden Dioden und von der Notwendigkeit ein Dichtelement unterzubringen ab, sodass für die entsprechenden Diffusorblöcke die Höhen der Lichtleisten von Ausführungsformen der Erfindung 3 mm, 6 mm oder bis zu 25 mm aufweisen. Aus diesen Grundmaßen ergeben sich drei Grundflächenmaße, einschließlich des erforderlichen Rahmens aus Lichtleisten von A₁ = 90x90 mm², A₂ = 90x180 mm² oder A₃ = 180x180 mm².

In einer weiteren Ausführungsform ist die Lichtleiste als ein Band ausgebildet, das auf den Diffusorblock gepresst ist. Das Band weist dabei bevorzugt einen Duroplast oder besonders bevorzugt einen Thermoplast auf und ist auf den Diffusorblock aufgeschrumpft.

Der Diffusorblock kann auch zumindest teilweise mit Rundungen ausgestaltet sein. Die Lichtleisten sind bis zu einem gewissen Grad flexibel biegbar ausgestaltet und passen sich so dem Diffusorblock mit Rundungen an.

Weiterhin ist es vorgesehen, dass der Diffusorblock mit seiner Rückseite auf einer metallisch reflektierenden Platte angeordnet ist, wobei die metallisch reflektierende Platte eine Metalllegierung der Gruppe Aluminium-, Kupfer- oder Eisenlegierung aufweist. Mit einer derartigen metallischen Platte ist es möglich, großflächig an Wänden oder Decken den entsprechenden Beleuchtungskörperflächen vorzusehen, wobei die einzelnen Beleuchtungskörper auf einer derartigen großflächigen Platte angeordnet sind.

Dazu kann der einzelne Diffusorblock mit seiner Rückseite auf einer Grundplatte stoffschlüssig verbunden sein. Als eine derartige stoffschlüssige Verbindung kann zwischen dem Diffusorblock und der Grundplatte eine optisch transparente Klebstoffschicht angeordnet sein, sodass bei metallischen Grundplatten die Reflektionseigenschaften der metallischen Oberfläche optisch genutzt wird. Andererseits ist es auch möglich, dass die Klebstoffschicht bereits lichtreflektierende Partikel wie Silberpartikel aufweist und damit selber eine optisch reflektierende Beschichtung der Rückseite des Beleuchtungskörpers bildet.

Die Erfindung wird nun anhand der beigefügten Figuren näher erläutert.
Figur 1 zeigt einen schematischen Querschnitt durch einen Teilbereich eines Beleuchtungskörpers gemäß einer ersten Ausführungsform der Erfindung;
Figur 2 zeigt einen schematischen Querschnitt durch einen Teilbereich eines Beleuchtungskörpers gemäß einer zweiten Ausführungsform der Erfindung;
Figur 3 zeigt eine schematische Seitenansicht einer Lichtleiste für einen Beleuchtungskörper gemäß einer dritten Ausführungsform der Erfindung;
Figur 4 zeigt eine schematische Draufsicht auf zwei Beleuchtungskörper gemäß einer vierten Ausführungsform der Erfindung;
Figur 5 zeigt eine schematische perspektivische Ansicht eines Beleuchtungskörpers gemäß einer fünften Ausführungsform der Erfindung;
Figur 6 zeigt eine schematische Draufsicht auf eine Beleuchtungsfläche mit Beleuchtungskörper gemäß einer sechsten Ausführungsform der Erfindung;

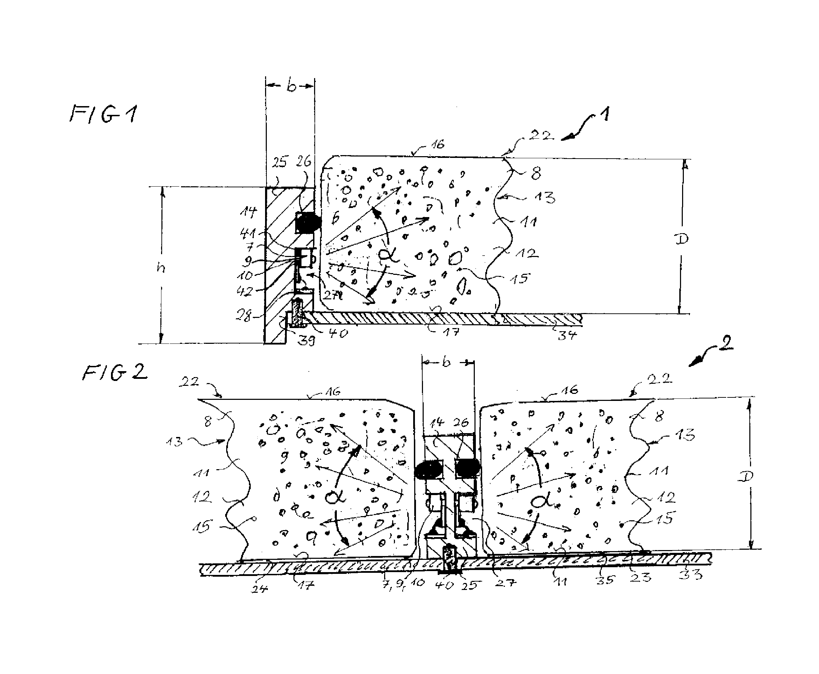

Figur 1 zeigt einen schematischen Querschnitt durch einen Teilbereich eines Beleuchtungskörpers 1 gemäß einer ersten Ausführungsform der Erfindung. Der Beleuchtungskörper 1 weist einen optischen Diffusor 8 auf, der als Glasdiffusor 11 aus Schaumglas 12 besteht und einen Diffusorblock 13 bildet. Ein derartiger Diffusorblock 13 weist aufgrund des Schaumglases 12 Gasblasen 15 mit einem unterschiedlichen Durchmesser auf, wobei der mittlere Durchmesser dm zwischen 0,5 mm ≤ dm ≤ 1 mm liegt.

Der optische Diffusor 9 aus Schaumglaus 12 ist in dieser ersten Ausführungsform der Erfindung auf einer Grundplatte 34 aus einer Aluminiumlegierung angeordnet, sodass die Rückseite 17 des Diffusorblockes 13 auf einer metallisch reflektierenden Oberfläche der Grundplatte 34 angeordnet ist. An einem Rand 39 der Grundplatte 34 ist mit Hilfe einer Schraubverbindung 40 ein Rahmen 25 aus einer Lichtleiste 14 fixiert. Dieser Rahmen 25 ist so bemessen, dass er den Diffusorblock 13 umgibt.

In weiteren Ausführungsformen kann die Grundplatte entfallen. Damit werden Ausführungsformen bereit gestellt, welche den Beleuchtungskörper transluzent erscheinen lassen. Beispielsweise kann bei einem Einbau des Beleuchtungskörpers in ein Fenster das Licht tagsüber von aussen nach innen durch den Diffusorblock und nachts von dem Diffusorblock nach außen scheinen.

Die Dicke des Diffusorblockes D kann zwischen 10 und 25 mm liegen und eine Diffusorplatte 22 bilden. Die Diffusorplatte 22 wird von der Lichtleiste 14 aus mit Hilfe einer Lichtquelle 7, die als Lumineszenz-Lichtquelle 9 ausgebildet ist und mindestens eine lichtemittierende Diode 10 aufweist, bestrahlt. Dabei ist der Abstrahlungswinkel α in eine Hauptrichtung begrenzt und liegt in dieser Ausführungsform der Erfindung zwischen 60° ≤ α ≤ 150°. Die lichtemittierende Diode weist eine Anode 41 und eine Kathode 42 auf. Während die Anode 41 mit einer metallischen Lichtleiste 14 elektrisch verbunden ist, die auf Anodenpotenzial liegt, ist die Kathode 42 über einen Verbindungssteg und eventuell über einen Verbindungsdraht mit einer von der metallischen Lichtleiste 14 isolierten Kathodenzuleitung 28 verbunden.

Die lichtemittierende Diode 10 und die Kathodenzuleitung 28 sind in einer etwa 6,5 mm breiten und etwa 3 mm tiefen Aussparung in der metallischen Lichtleiste 14 angeordnet. Darüber hinaus weist die metallische Lichtleiste 14 eine umlaufende , 3 mm tiefe Dichtnut 26 auf, die den gesamten Diffusorblock 13 umgibt und die Lichtquelle 7 vor Feuchtigkeit schützt. Gleichzeitig kann das gummielastische Dichtungselement 43 den Diffusorblock in Position auf der Grundplatte 34 halten. Wenn jedoch der Kraftschluss zwischen dem gummielastischen Dichtungselement 43 und dem Diffusorblock 13 nicht ausreicht, um diesen zuverlässig auf der Grundplatte 34 zu halten, kann der Diffusorblock 13 mit Hilfe eines Stecksystems und/oder mit Hilfe einer Klebstoffschicht auf der Grundplatte fixiert werden.

Neben der Aussparung 26 für die umlaufende Dichtnut sind weitere Aussparungen 27 für die Unterbringung der lichtemittierenden Diode 10 und der Kathodenzuleitung 28 in den Lichtleisten 14 vorgesehen. Die Breite b einer derartigen Lichtleiste 14 kann 8 mm betragen, während die Tiefe der Aussparungen 26 und 27 lediglich 3 mm aufweist. Die Höhe h der Lichtleiste 14 ist in dieser gezeigten Ausführungsform 20 mm oder 25 mm.

Das an den Luftblasen 15 gestreute Licht wird als diffuses Licht und indirekte Beleuchtung von der Oberseite 16 des Diffusorblockes 13 abgestrahlt, während durch die reflektierenden Eigenschaften der Grundplatte 34 die Strahlung der lichtemittierenden Diode der Rückseite 17 des Diffusorblockes 13 gestreut wird. Die Breite von 8 mm für eine Lichtleiste 14 reicht aus, um, wie es die nächste Figur 2 zeigt, eine Mehrzahl von Diffusorblöcken 13 von Beleuchtungskörpern auf einer gemeinsamen Grundplatte zu fixieren, abzudichten und mit Lichtquellen zu bestücken.

Figur 2 zeigt einen schematischen Querschnitt durch einen Teilbereich eines Beleuchtungskörpers 2 gemäß einer zweiten Ausführungsform der Erfindung. In dieser Ausführungsform der Erfindung sind auf einer metallischen Platte 33 mehrere Diffusorblöcke 13 in Form von Diffusorplatten 22 angeordnet, die von gemeinsamen Lichtleisten 14 mit einer Lichtquelle von unterschiedlicher Farbtemperatur versorgt werden. Dazu weist die Lichtleiste 14 die gleiche Breite b von 8 mm wie in Figur 1 auf. Diese Breite b reicht aus, um die 3 mm tiefen Aussparungen sowohl für die umlaufende Dichtnut 26, als auch für die Aussparungen 27 der lichtemittierenden Dioden bereitzustellen. Dabei kann bei gleicher Dimensionierung eine Vielzahl von unterschiedlich zusammengestellten Beleuchtungskörpern 2 zueinander angeordnet werden. Komponenten mit gleichen Funktionen wie in Figur 1 werden mit gleichen Bezugszeichen in Figuren 2 bis 6 gekennzeichnet und nicht extra erörtert.

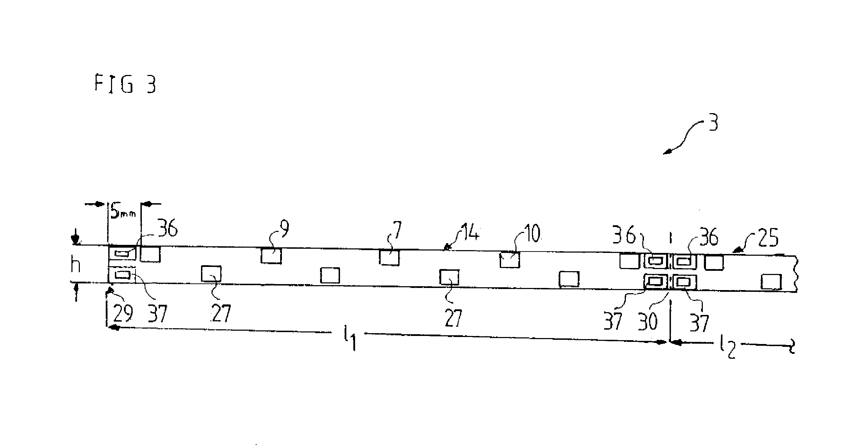

Figur 3 zeigt eine schematische Seitenansicht einer Lichtleiste 14 für einen Beleuchtungskörper 3 gemäß einer dritten Ausführungsform der Erfindung. Diese Lichtleiste 14 zeigt auf einem Rand eines polygonalen Beleuchtungskörpers von einer Länge 90 oder 180 mm mehrere Aussparungen 27 die in einer oberen und einer unteren Zeile verteilt angeordnet sind und für Lumineszenzlichtquellen 9 vorgesehen sind. In den Ecken 29 und 30 der Lichtleisten sind Lotanschlussflächen 36 für das Anodenpotenzial und Lotanschlussflächen 37 für das Kathodenpotenzial vorgesehen. Diese Eckenbereiche mit Lotanschlussflächen 36 und 37 umfassen einen Randbereich von etwa 5 mm Breite. In dem Rest der Längen 1 der Lichtleiste 14 kann eine unterschiedliche Anzahl von Aussparungen 27 für die Lichtquellen 7 angeordnet werden. Die Höhe h ist in dieser Ausführungsform der Erfindung für die Lichtleisten entweder 20 oder 25 mm je nach Anwendung für einen einzelnen Beleuchtungskörper oder für eine Fläche aus mehreren Beleuchtungskörpern.

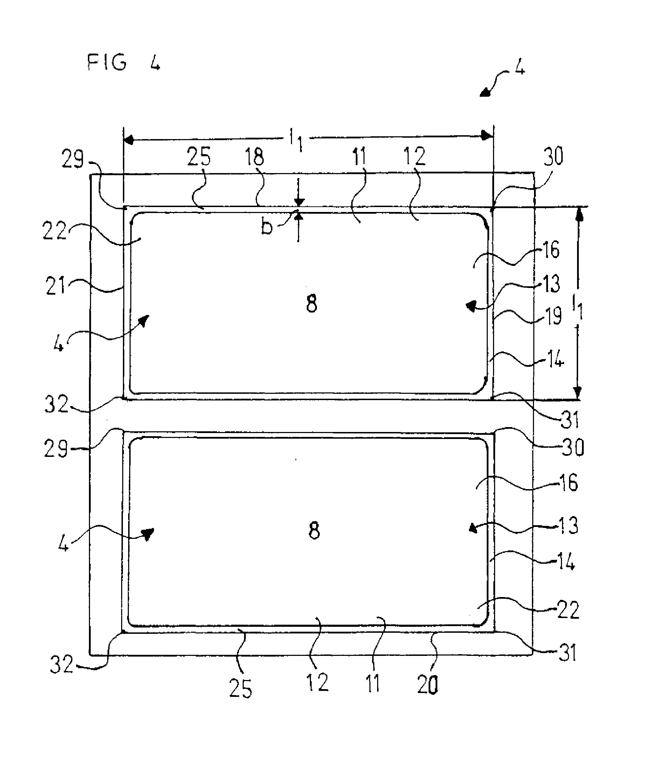

Figur 4 zeigt eine schematische Draufsicht auf zwei Beleuchtungskörper 4 gemäß einer vierten Ausführungsform der Erfindung. Diese Beleuchtungskörper 4 gemäß der vierten Ausführungsform der Erfindung weisen zwei Längen l₁ und l₂ auf, wobei l₁ etwa 90 mm und l₂ 180 mm sind. Damit ist die Anzahl der Lichtleisten 14 auf zwei Lichtleistentypen mit der Länge 11 und 12 begrenzt und es können damit vier unterschiedliche Flächen der Beleuchtungskörper 4 von derartigen Lichtleisten 14 umgeben werden. In dieser Ausführungsform der Erfindung sind die beiden gezeigten und leuchtenden Beleuchtungskörper 4 mit einem optischen Diffusor 8 ausgestattet, der einen Bruchteil der darunter angeordneten farbigen und gestreiften Flächenmuster durchscheinen lässt, sobald bei Einschaltung der Lichtleisten, der Diffusor 13 ein indirektes, hell leuchtendes Licht abgibt, das sich in seiner Temperatur nach den Möglichkeiten und Grenzen der in den Lichtleisten 14 eingebauten lichtemittierenden Dioden und nach der Einfärbung des Schaumglases 12 richtet, wobei in das Schaumglas 12 auch Phosphoratome und andere fluoreszierende Elemente eingebaut sein können, die den Spektralbereich des Beleuchtungskörpers 4 durch Fluoreszenz erweitern können.

Die in Figur 4 gezeigte Ausführungsform stellt eine Unterputzvariante dar. Damit ist eine Einbautiefe von weniger als 20 mm möglich. In weiteren Ausführungsformen kann auch eine Aufputzvariante bereitgestellt werden, die beispielsweise eine Höhe über Putz von 25 mm aufweist.

Die einzelnen Beleuchtungskörper können zudem durch einen Rahmen miteinander verbunden werden. Dadurch kann auf kundenspezifische Wünsche besonders eingegangen werden.

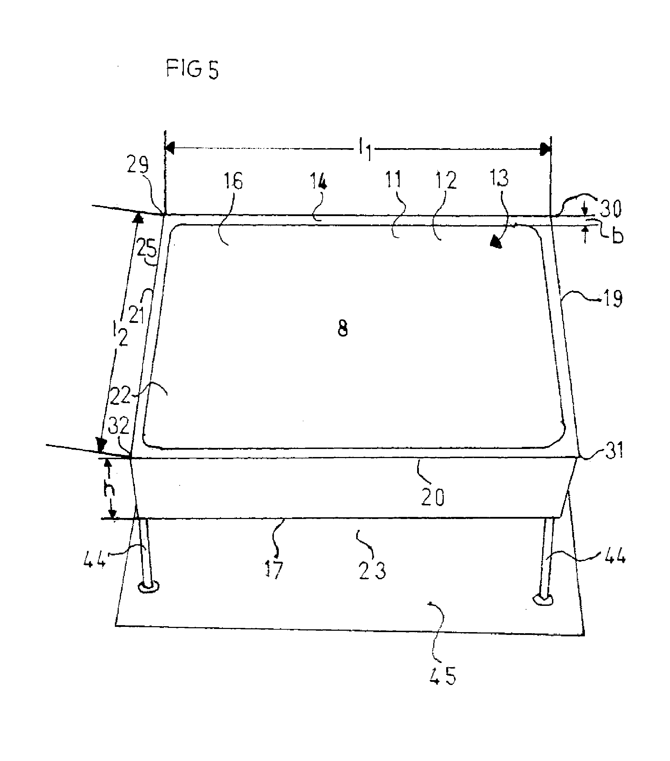

Figur 5 zeigt eine schematische perspektivische Ansicht eines Beleuchtungskörpers 5 gemäß einer fünften Ausführungsform der Erfindung. Dieser Beleuchtungskörper 5 der Figur 5 unterscheidet sich von den vorhergehenden Beleuchtungskörpern dadurch, dass die Lichtleiste 14 keine feste Rahmenkonstruktion aufweist. In dieser Ausführungsform ist die Lichtleiste 14 als ein Band 46 ausgebildet, das auf den Diffusorblock 13 aufgeschrumpft, und somit auf den Diffusorblock 13 gepresst ist. Dabei wird die bandförmig ausgebildete Lichtleiste 14 so fixiert, dass diese blendfrei und wasserdicht auf dem Diffusorblock 13 verpresst ist. Das Band 46 beinhaltet dazu bevorzugt einen Thermoplast. Es ist auch möglich, dass das Band 46 einen Duroplast beinhaltet. Das Band 46 kann zudem mit Klebstoff versehen werden, um den Grad der Wasserdichte weiter zu erhöhen. Die Höhe h des Bandes 46 ist bevorzugt etwa 20 mm. Die Längen l₁ und l₂ des Bandes 46 betragen in verschiedenen Ausführungsformen mit quadratischer Fläche jeweils 90 mm oder 180 mm. In einer weiteren Ausführungsform beträgt die Länge l₁ 90 mm und die Länge l₂ 180 mm.

In der Ausführungsform der Erfindung gemäß Figur 5 rahmt die bandförmig ausgebildete Lichtleiste 14 die Randseiten 18, 19, 20 und 21 des Diffusorblockes 13 sowohl an der Oberseite 16 als auch auf der Rückseite 17 ein. Damit entsteht ein Beleuchtungskörper, der sowohl über die Rückseite 17 als auch über die Oberseite 16 ein indirektes Licht abstrahlt.

Der Beleuchtungskörper 5 der Figur 5 ist als Tisch- oder Nachttischbeleuchtung ausgebildet und weist in der gezeigten Ausführungsform eine quadratische Fläche auf, wobei die Länge l₁ gleich der Länge l₂ ist. Ferner ist dieser Beleuchtungskörper 5 beabstandet von einer Abstellfläche 45 mittels Stützen 44, die hier als Stifte ausgebildet sind, angeordnet, wobei sich das indirekte Licht auf der Abstellfläche 45 spiegeln kann. Dazu kann die Abstellfläche 45 Aluminium aufweisen. In weiteren Ausführungsformen weist die Abstellfläche Kunststoff und/oder Holz auf. Insgesamt weist der Beleuchtungskörper 5 in der gezeigten Ausführungsform vier als Stifte ausgebildete Stützen 44 auf, von denen in Figur 5 zwei Stützen 44 dargestellt sind. Die Stifte dienen dabei neben der Befestigung auch der Stromführung, wobei in der gezeigten Ausführungsform ein Stift als Anode und die drei weiteren Stifte als Kathoden ausgebildet sind. Die Stifte 44 werden am Diffusor elektrisch mit den nicht näher dargestellten Lichtquellen verbunden. Durch ein ebenfalls nicht näher dargestelltes Stecksystem werden die Stifte 44 auf der Abstellfläche 45 aufgenommen und die die Kathode bildenden Stifte in einer Fassung elektrisch miteinander verbunden. Rückseitig ist an die jeweiligen Stecker eine Stromversorgung angeschlossen.

Die Abstellfläche 45 ermöglicht durch ein skalierbares Rastermaß die Aufnahme unterschiedlichster Anzahlen von Beleuchtungskörpern, die in unterschiedlichen Orientierungen zueinander angeordnet werden können.

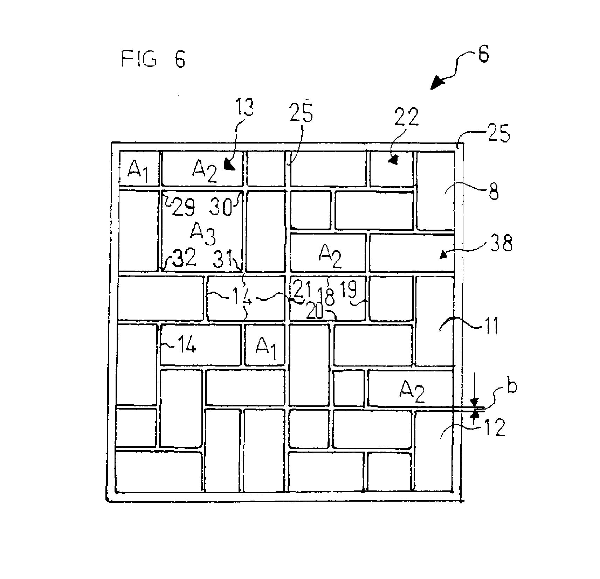

Figur 6 zeigt eine schematische Draufsicht auf eine Beleuchtungsfläche 38, die sich aus Oberseiten 16 von mehreren Diffusorblöcken 13 zusammensetzt. Für diese Ausführungsform der Erfindung wurden die unterschiedlichen möglichen Grundflächenmaße A₁ mit 90 x 90 mm², A₂ mit 90 x 180 mm² oder A₃ mit 180 x 180 mm² der Beleuchtungskörper 6 eingesetzt. Bei dieser Ausführungsform wird die gleichmäßige Breite b, der die Diffusionsblöcke 13 beleuchtenden Lichtleisten 14, wie es in Figur 2 gezeigt wird, ausgenutzt. Somit können mit diesen drei Grundflächenmaßen A₁ bis A₃ ganze Wandbereiche, oder Deckenbereiche und ähnliche Flächen mit den Beleuchtungskörpern 6, wie es Figur 6 zeigt, ausgestattet werden.

### Bezugszeichenliste

1 Beleuchtungskörper
2 Beleuchtungskörper
3 Beleuchtungskörper
4 Beleuchtungskörper
5 Beleuchtungskörper
6 Beleuchtungskörper
7 Lichtquelle
8 optischer Diffusor
9 Lumineszenz-Lichtquelle
10 lichtemittierende Diode (LED)
11 Glasdiffusor
12 Schaumglas
13 Diffusorblock
14 Lichtleiste
15 Gasblase
16 Oberseite des Diffusorblockes
17 Rückseite des Diffusorblockes
18 Randseite
19 Randseite
20 Randseite
21 Randseite
22 Diffusorplatte
23 Reflektor
24 Farbschablone
25 Rahmen
26 umlaufende Dichtnut
27 Aussparung
28 Kathodenzuleitung
29 Ecke eines Polygons
30 Ecke eines Polygons
31 Ecke eines Polygons
32 Ecke eines Polygons
33 metallische Platte
34 Grundplatte
35 Klebstoffschicht (transparent)
36 Lotanschlussfläche
37 Lotanschlussfläche
38 Beleuchtungsfläche
39 Rand
40 Schraubverbindung
41 Anode
42 Kathode
43 Dichtungselement
44 Stütze
45 Abstellfläche
46 Band
A₁ erstes Grundflächenmaß
A₂ zweites Grundflächenmaß
A₃ drittes Grundflächenmaß
b Breite einer Lichtleiste
G Dicke des Diffusorblockes
h Höhe einer Lichtleiste
l Länge einer Lichtleiste
α Abstrahlungswinkel einer LED
λₘᵢₙ kürzeste abzustrahlende Wellenlänge

## Patentansprüche

1. Beleuchtungskörper mit einer Lichtquelle (7) und einem optischen Diffusor (8) aufweisend:
- eine Lumineszenz-Lichtquelle (9) mit mindestens einer lichtemittierenden Diode (10) und
- einen Glasdiffusor (11),
wobei der Glasdiffusor (11) einen massiven Diffusorblock (13) aus Schaumglas (12) aufweist, wobei der Diffusorblock (13) ein Schaumglas (12) aus Mineralglas aufweist und wobei die Lichtquelle (7) in Lichtleisten (14), die den Diffusorblock (13) umgeben, angeordnet ist, wobei das Schaumglas (12) des Glasdiffusors (11) geschlossenporig ist und Gasblasen (15) aufweist, wobei die Gasblasen (15) einen mittleren Durchmesser dm zwischen 0,5 mm ≤ dm ≤ 1 mm aufweisen.

2. Beleuchtungskörper nach Anspruch 1,
wobei einzelne Gasblasen (15) größer als 1 mm sind.

3. Beleuchtungskörper nach einem der vorhergehenden Ansprüche,
wobei die Lumineszenz-Lichtquelle (9) einen Abstrahlungswinkel α zwischen 60° ≤ α ≤ 150° aufweist.

4. Beleuchtungskörper nach einem der Ansprüche 1 bis 3,
wobei die Lumineszenz-Lichtquelle (9) einen Abstrahlungswinkel α zwischen 90° ≤ α ≤ 120° aufweist.

5. Beleuchtungskörper nach einem der vorhergehenden Ansprüche,
wobei die Lumineszenz-Lichtquelle (9) ein Licht emittiert, das einem warmweißen Lichtspektrum mit einer Farbtemperatur unter 2700 K angepasst ist.

6. Beleuchtungskörper nach einem der Ansprüche 1 bis 5,
wobei das Mineralglas fluoreszierende Elemente aufweist.

7. Beleuchtungskörper nach einem der vorhergehenden Ansprüche,
wobei der Diffusorblock (13) eine massive Diffusorplatte (22) bildet, die eine Oberseite (16), eine Rückseite (17) und Randseiten (18 - 21) aufweist, und wobei die Lichtquelle (7) in Lichtleisten (14), welche die Randseiten (18 - 21) umgeben, angeordnet ist.

8. Beleuchtungskörper nach Anspruch 7,
wobei die Rückseite (17) des Diffusorblockes (13) eine optisch reflektierende Beschichtung oder optisch reflektierende Folie eines Reflektors (23) aufweist.

9. Beleuchtungskörper nach Anspruch 7,
wobei die Rückseite (17) des Diffusorblockes (13) eine optisch durch den Diffusorblock (13) durchscheinende Farbschablone (24) aufweist.

10. Beleuchtungskörper nach einem der vorhergehenden Ansprüche,
**dadurch gekennzeichnet, dass** der Diffusorblock (13) oberseitig und/oder im Inneren farbige Muster und/oder Strukturen aufweist.

11. Beleuchtungskörper nach einem der vorhergehenden Ansprüche,
wobei der Glasdiffusor (11) aus einem massiven Glasbarren hergestellt ist und durch die mit lichtemittierenden Dioden (10) ausgestatteten Lichtleisten (14) einheitlich von Licht durchflutet wird.

## Claims

1. Light fitting comprising a light source (7) and an optical diffuser (8) having:
- a luminescent light source (9) comprising at least one light-emitting diode (10) and
- a glass diffuser (11),
the glass diffuser (11) having a solid diffuser block (13) made of cellular glass (12), the diffusor block (13) comprising a cellular glass (12) made of mineral glass and the light source (7) being arranged in light strips (14) which surround the diffuser block (13), wherein the cellular glass (12) of the glass diffuser (11) has closed pores and has gas bubbles (15), the gas bubbles (15) having an average diameter dm of 0,5 mm ≤ dm ≤ 1 mm.

2. Light fitting in accordance with claim 1, **characterised in that** individual gas bubbles (15) are larger than 1 mm.

3. Light fitting in accordance with one of the preceding claims, **characterised in that** the luminescent light source (9) has a beam angle α of 60° ≤ α ≤ 150°.

4. Light fitting in accordance with one of claims 1 to 3, **characterised in that** the luminescent light source (9) has a beam angle α of 90° ≤ α ≤ 120°.

5. Light fitting in accordance with one of the preceding claims, **characterised in that** the luminescent light source emits a light that is adapted to a warm white light spectrum with a colour temperature of below 2700 K.

6. Light fitting in accordance with one of claims 1 to 5, **characterised in that** the mineral glass contains fluorescent elements.

7. Light fitting in accordance with one of the preceding claims, **characterised in that** the diffuser block (13) forms a solid diffuser plate (22) which has a top side (16), a rear side (17) and edge sides (18 to 21), the light source (7) being arranged in light strips (14) which surround the edge sides (18 to 21).

8. Light fitting in accordance with claim 7, **characterised in that** the rear side (17) of the diffuser block (13) has an optically reflective coating or optically reflective film of a reflector (23).

9. Light fitting in accordance with claim 7, **characterised in that** the rear side (17) of the diffuser block (13) has a coloured template (24) which shows optically through the diffuser block (13).

10. Light fitting in accordance with one of the preceding claims, **characterised in that** the diffuser block (13) has coloured patterns and/or structures on its upper side or inside.

11. Light fitting in accordance with one of the preceding claims, **characterised in that** the glass diffuser (11) is produced from a solid glass bar and uniformly suffused with light by the light strips (14) equipped with light-emitting diodes (10).

## Revendications

1. Appareil d'éclairage comprenant une source lumineuse (7) et un diffuseur optique (8), présentant :
- une source lumineuse luminescente (9) comprenant au moins une diode électroluminescente (10) et
- un diffuseur en verre (11),
dans lequel le diffuseur en verre (11) présente un bloc diffuseur (13) massif en verre cellulaire (12), le bloc diffuseur (13) présentant un verre cellulaire (12) en verre minéral, et dans lequel la source lumineuse (7) est disposée dans des rampes lumineuses (14) qui entourent le bloc diffuseur (13), dans lequel le verre cellulaire (12) du diffuseur en verre (11) est à alvéoles fermées et présente des bulles de gaz (15), les bulles de gaz (15) présentant un diamètre moyen dm entre 0,5 mm ≤ dm ≤ 1 mm.

2. Appareil d'éclairage selon la revendication 1, dans lequel les bulles de gaz (15) individuelles sont supérieures à 1 mm.

3. Appareil d'éclairage selon l'une quelconque des revendications précédentes, dans lequel la source lumineuse luminescente (9) présente un angle de rayonnement α entre 60° ≤ α ≤ 150°.

4. Appareil d'éclairage selon l'une quelconque des revendications 1 à 3, dans lequel la source lumineuse luminescente (9) présente un angle de rayonnement α entre 90° ≤ α ≤ 120°.

5. Appareil d'éclairage selon l'une quelconque des revendications précédentes, dans lequel la source lumineuse luminescente (9) émet une lumière qui est adaptée à un spectre lumineux blanc chaud avec une température de couleur inférieure à 2700 K.

6. Appareil d'éclairage selon l'une quelconque des revendications 1 à 5, dans lequel le verre minéral présente des éléments fluorescents.

7. Appareil d'éclairage selon l'une quelconque des revendications précédentes, dans lequel le bloc diffuseur (13) forme une plaque diffuseur (22) massive qui présente un côté supérieur (16), un côté arrière (17) et des côtés latéraux (18 - 21) et dans lequel la source lumineuse (7) est disposée dans des rampes lumineuses (14) qui entourent les côtés latéraux (18 - 21).

8. Appareil d'éclairage selon la revendication 7, dans lequel le côté arrière (17) du bloc diffuseur (13) présente un revêtement optiquement réfléchissant ou une feuille optiquement réfléchissante d'un réflecteur (23).

9. Appareil d'éclairage selon la revendication 7, dans lequel le côté arrière (17) du bloc diffuseur (13) présente un gabarit de couleur (24) transparaissant optiquement à travers le bloc diffuseur (13).

10. Appareil d'éclairage selon l'une quelconque des revendications précédentes, **caractérisé en ce que** le bloc diffuseur (13) présente du côté supérieur et/ou à l'intérieur des motifs et/ou structures colorés.

11. Appareil d'éclairage selon l'une quelconque des revendications précédentes, dans lequel le diffuseur en verre (11) est fabriqué à partir d'un lingot de verre massif et est inondé uniformément de lumière à travers les rampes lumineuses (14) équipées de diodes électroluminescentes (10).
